# EUROPÄISCHE PATENTSCHRIFT

(11) **EP 1 672 329 B1**
(45) Veröffentlichungstag und Bekanntmachung des Hinweises auf die Patenterteilung: **10.08.2016**
(21) Anmeldenummer: 05105873.3
(22) Anmeldetag: 30.06.2005
(51) Int. Cl.: G01D 13/26

(54) **Zeigerinstrument**
Pointer instrument
Instrument pointeur

(30) Priorität: 16.12.2004 DE 102004060693
(43) Veröffentlichungstag der Anmeldung: 21.06.2006
(73) Patentinhaber: Continental Automotive GmbH, 30165 Hannover (DE)
(72) Erfinder: Balsfulland, Wolfgang, 64283 Darmstadt (DE); Friepes, Gerhard, 61231 Bad Nauheim (DE); Förster, Axel, 63067 Offenbach (DE); Hurth, Patrik, 64807 Dieburg (DE)

(56) Entgegenhaltungen:
- EP-A- 0 997 338
- DE-A1- 4 444 471
- DE-A1- 19 622 900
- DE-A1- 19 916 221
- US-A1- 2002 174 733

## Beschreibung

Die Erfindung betrifft ein Zeigerinstrument, insbesondere für ein Kraftfahrzeug, mit einem Zeigerantrieb zur Auslenkung eines um eine Drehachse drehbaren Trägerkörpers, an dem ein in einer Anzeige sichtbarer Zeiger vorgesehen ist, der außerhalb der Drehachse gelagert ist.

Bei derartigen Zeigerinstrumenten wird regelmäßig eine Beleuchtung des Zeigers verwirklicht, damit auch mit abnehmendem Licht der Dämmerung oder bei Nacht eine problemlose Ablesung gewährleistet ist. Die Anordnung des Zeigers an einen Trägerkörper bietet darüber hinaus den Vorteil, den Trägerkörper beispielsweise ringförmig gestalten zu können und auf diese Weise bei entsprechender Lagerung den zentralen Bereich des Rings von Bauteilen der Zeigereinrichtung freizuhalten. Zur Beleuchtung des Zeigers ist hierbei meist ein mit dem Zeiger mitgeführtes Leuchtmittel vorgesehen, das regelmäßig über eine flexible Leitung mit der erforderlichen Spannung versorgt wird. Insbesondere bei der Ausbildung als Ringzeiger bedient man sich hier zumindest teilweise des besonderen Vorteils des freien Zentralbereiches des Zeigerinstruments. Da von der flexiblen Leitung zumindest auf einer vom Betrachter abgewendeten Seite einer beispielsweise als Zifferblatt ausgeführten Anzeigefläche ein großer Bereich überstrichen wird und damit von anderen Bauteilen freizuhalten ist, ist der Vorteil des geringeren Bauraums teilweise aufgezehrt. Darüber hinaus erhöht sich die Bautiefe des Trägerkörpers zumindest abschnittsweise aufgrund der erforderlichen Vorkehrungen für die aktive Beleuchtung, so dass als weiterer Nachteil Bauraumrestriktionen im Bereich der Bewegungsbahn des Zeigers hinzutreten.

Eine eingangs beschriebene Anordnung ist bereits aus der europäischen Patentschrift EP 0 997 338 B1 und der DE 199 16 221 A1 bekannt.

Ausgehend von den Problemen und Nachteilen des Stands der Technik hat es sich die Erfindung zur Aufgabe gemacht, die Beleuchtung eines Zeigers der eingangs genannten Art so zu gestalten, dass im Bereich neben der Bewegungsbahn des Zeigers unerwünschte Bauraumrestriktionen beseitigt sind und trotzdem eine für die Ablesbarkeit hervorragende Ausleuchtung erfolgt.

Zur Lösung der Aufgabe wird erfindungsgemäß ein Zeigerinstrument mit den Merkmalen des Patentanspruchs 1 vorgeschlagen.

Die erfindungsgemäßen Vorteile, insbesondere der freie Bauraum in den vom Trägerkörper zumindest teilweise umfassten oder dem Trägerkörper benachbarten Bereichen kommt voll zum Tragen, wenn der Trägerkörper außerhalb der Drehachse Zeigerantriebs angetrieben ist bzw. mit einem solchen Antrieb in mechanischer Verbindung steht.

Der besondere Vorteil der Erfindung liegt in der Beseitigung der Notwendigkeit einer Energieversorgung für eine an dem Zeiger angeordnete Lichtquelle. Die erfindungsgemäße Lichtleitung von einer stehenden Lichtquelle zu dem bewegten Zeiger unter Zwischenschaltung einer Grenzfläche des Lichtleiterelements und einer Grenzfläche des Trägerkörpers bzw. Zeigers ermöglicht die Verwendung bestehender Lichtquellen zur Beleuchtung eines bewegten Zeigers. Auf diese Weise ist eine Fortlassung des baulichen Restriktionen mit sich bringenden flexiblen Leiters und einer an den Zeiger angeordneten Lichtquelle möglich und der entstehende Freiraum kann für weitere Anzeigemodule verwendet werden. Besonders vorteilhafte Anwendung findet die Erfindung bei einer Ausbildung des Zeigers oder Trägerkörpers als Ringzeiger bzw. Ring, der an Stellen seines Umfangs gelagert und angetrieben ist auf diese Weise den Mittenbereich frei lässt. Zweckmäßig kann der Trägerkörper, der den Zeiger trägt, zum Betrachter hin abgedeckt sein, so dass nur der Zeiger sichtbar ist.

Mit Vorteil kann auf der einem Betrachter abgewandten Seite des Trägerkörpers ein Lichtleiterelement angeordnet werden, das eine erste Einkoppelfläche aufweist, in welche Licht mindestens einer Lichtquelle einleitbar ist und welches Lichtleiterelement eine erste Auskoppelfläche aufweist, welche sich entlang der Bewegungsbahn des Zeigers erstreckt und der Zeiger und/oder der Trägerkörper eine zweite Einkoppelfläche aufweist, die gegenüber der ersten Auskoppelfläche des Lichtleiterelements angeordnet ist, so dass aus der ersten Auskoppelfläche austretendes Licht in die zweite Einkoppelfläche des Zeigers und/oder des Trägerkörpers eintreten kann und der Zeiger auf diese Weise beleuchtbar ausgebildet ist. Diese Ausgestaltung löst das Problem der Lichtleitung zu dem bewegten Zeiger besonders sinnvoll, indem Einkoppelflächen - Auskoppelflächen - Paare relativ beweglich zueinander gestaltet sind.

Eine zweckmäßige Weiterbildung der Erfindung sieht vor, dass das Zeigerinstrument eine Skala aufweist, die sich entlang der Bewegungsbahn des Zeigers erstreckt, so dass der Zeiger entlang der Skala zur Anzeige von Messwerten beweglich ausgebildet ist. Insbesondere bei einer gekrümmten oder sogar kreissegmentförmigen Bewegungsbahn des Zeigers ist es für ein klassisch anmutendes Erscheinungsbild zweckmäßig, wenn der Zeiger auf der radial innen liegenden Seite der Skala die Messwerte nach außen gerichtet anzeigt. Um einen größeren freien Bereich radial innen der Bewegungsbahn zu erlangen, kann der Zeiger auch zweckmäßig die Messwerte radial von außen her anzeigen.

Besondere Flexibilität wird erlangt, indem die Skala auf einem Display dargestellt ist. Auf diese Weise kann problemlos z. B. eine Umschaltung der physikalischen Einheit der Skalierung erfolgen.

Entsprechend der Anordnung und der Zeigerichtung des Zeigers - also radial nach außen oder radial nach innen - ist es sinnvoll, die Skala radial außerhalb des Kreises anzuordnen oder radial innerhalb.

Besondere Eignung weist die erfindungsgemäße Anordnung in Verbindung mit als Leuchtdioden ausgebildeten Lichtquellen auf, da diese aufgrund ihrer geringen Wärmeentwicklung auch unproblematisch nahe an der ersten Einkoppelfläche angeordnet werden können. Hierbei ist es insbesondere bei der Verwendung von SMD-Leuchtdioden sinnvoll, das Lichtleiterelement direkt auf einer Leiterplatte anzuordnen und dort zu befestigen. Besonders vorteilhaft ist hierbei eine Ausbildung des Lichtleiterelements, die mehrere Einkoppelflächen aufweist, an denen jeweils mindestens eine Lichtquelle bzw. Leuchtdiode vorgesehen ist. Die Einkoppelflächen können hierbei als stirnseitige Aussparungen im Lichtleiterelement vorgesehen sein. Die Lichtquellen bzw. Leuchtdioden können auch entlang der Bewegungsbahn des Zeigers Licht unterschiedlicher Farbe emittierend ausgebildet sein oder sogar hinsichtlich der Farbe der Lichtemission umschaltbar sein. Besonders zweckmäßig ist eine Gestaltung des Lichtleiterelements, welche zumindest zum Teil eine Ausbildung der Erstreckungsrichtung parallel zur Anzeige zumindest abschnittsweise als vorzugsweise kreissegmentförmiger Ring vorsieht, dessen erste Stirnseite mit mindestens einer ersten Einkoppelfläche versehen ist und dessen zweite Stirnseite mit mindestens einer ersten Auskoppelfläche versehen ist.

Eine Ausbildung der Skala als Zifferblatt, dessen Ziffern zumindest zum Teil transmissiv ausgebildet sind, hat den Vorteil einer besonders kontrastreichen Darstellung der Ziffern bei Hinterleuchtung.

Eine Ansteuereinheit des Zeigerinstruments kann vorsehen, dass entlang der Bewegungsbahn des Zeigers angeordnete Lichtquellen nur dann angesteuert oder dann gesondert angesteuert werden, wenn sich der Zeiger in einer bestimmten Nähe zu der Lichtquelle auf der Bewegungsbahn befindet. Auf diese Weise wird vermieden, dass Lichtquellen, die in ihrer Anordnung einen bestimmten Abstand zu dem Zeiger überschreiten und daher einen geringen Beitrag zur Beleuchtung des Zeigers leisten, unnötig viel Energie verbrauchen und zur Erwärmung des Zeigerinstruments beitragen. Zusätzlich kann so der relevante Bereich hervorgehoben werden. Damit das von den Lichtquellen emittierte und von dem Lichtleiterelement zu den Trägerkörper weitergeleitete Licht zum größtmöglichen Teil zur Beleuchtung des Zeigers beiträgt, ist es zweckmäßig, wenn der Trägerkörper zumindest zum Teil als Lichtleiter ausgebildet und derart gestaltet ist, dass in die zweite Einkoppelfläche einfallendes Licht zumindest teilweise zu dem Zeiger umgelenkt wird.

Weiterer Nutzen lässt sich aus dem Einsatz des erfindungsgemäßen Lichtleiterelements erlangen, wenn das Lichtleiterelement neben der ersten Auskoppelfläche noch eine zweite Auskoppelfläche aufweist, die in die Richtung eines Betrachters weist und welche auf der dem Betrachter abgewandten Seite der Skala angeordnet ist und das Lichtleiterelement derart ausgebildet ist, dass ein erster Teil des eingekoppelten Lichts aus der ersten Auskoppelfläche austritt und ein zweiter Teil des eingekoppelten Lichts aus der zweiten Auskoppelfläche austritt, so dass der Zeiger beleuchtet und die Skala auf diese Weise hinterleuchtet ist. Hierzu ist eine Gestaltung des Lichtleiterelements besonders zweckmäßig, welche zumindest abschnittsweise in einer zu der Anzeige senkrechten Ebene einen Querschnitt aufweist, welcher einen ersten Abschnitt aufweist, der sich von der im Bereich der Lichtquelle befindlichen Einkoppelfläche zu der in dem Bereich des Trägerkörpers oder Zeigers befindlichen ersten Auskoppelfläche erstreckt und welcher Querschnitt einen zweiten Abschnitt aufweist, welcher eine zweite Auskoppelfläche aufweist und der von dem ersten Anschnitt abzweigt, wobei die zweite Auskoppelfläche zur Hinterleuchtung einer Skala rückseitig eines Zifferblattabschnitts oder eines Displays angeordnet ist. Ebenso wie die Skala ist es sinnvoll, wenn das Lichtleiterelement in einer Erstreckungsrichtung eine parallel zu der Anzeige verlaufende Krümmung aufweist und der zweite Abschnitt radial innen angeordnet ist. Insbesondere bei einer Ausbildung des zweiten Abschnitts mit einer Verjüngung in Richtung zunehmenden radialen Abstands zu dem ersten Abschnitt kommt der erlangte Bauraumvorteil im Zentralbereich des Zeigerinstruments zur vollen Geltung, da zur Hinterleuchtung der Skala keine weiteren Lichtquellen erforderlich sind.

Im Folgenden ist die Erfindung anhand eines speziellen Ausführungsbeispiels zur Verdeutlichung unter Bezugnahme auf Zeichnungen näher erläutert. Es zeigen:
- Figur 1:: eine dreidimensionale Zusammenstellung wesentlicher Bauelemente eines erfindungsgemäßen Zeigerinstruments,
- Figur 2:: ein Querschnitt durch eine Seite der Ringform der in Fig. 1 dargestellten wesentlichen Bauteile eines erfindungsgemäßen Zeigerinstruments.

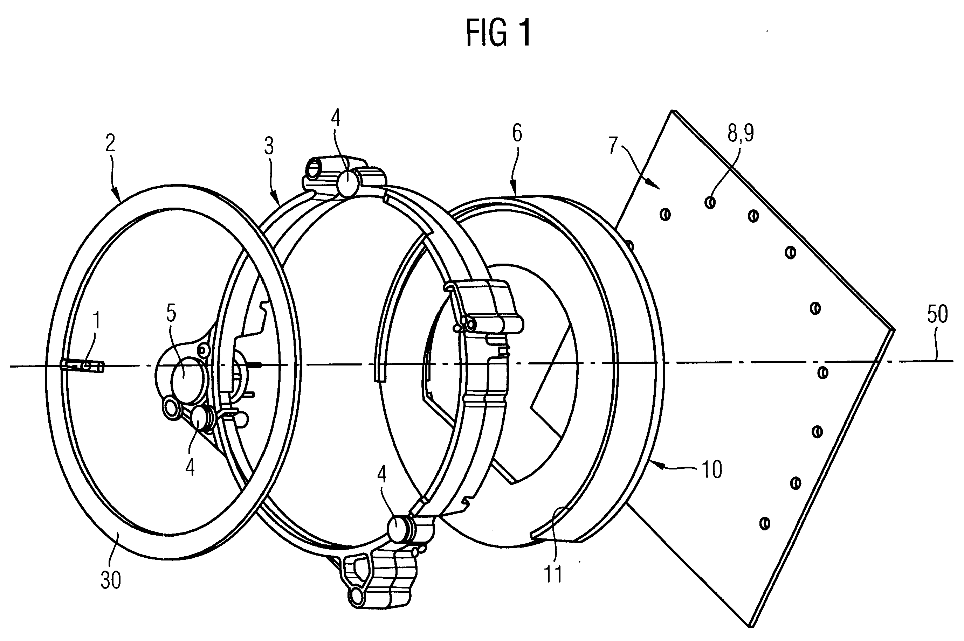

Figur 1 zeigt entlang einer Drehachse 50 angeordnete wesentliche Bauelemente eines erfindungsgemäßen Zeigerinstruments, einen Zeiger 1 mit einem Trägerkörper 2, einen Halter 3 mit drei Lagern 4 und einem Zeigerantrieb 5, ein Lichtleiterelement 6, eine Leiterplatte 7 und als Leuchtdioden 8 ausgebildete Lichtquellen 9, die auf der Leiterplatte 7 als SMD befestigt und elektrisch kontaktiert sind.

Das Lichtleiterelement 6 ist im Wesentlichen als zylindrisches Ringsegment ausgebildet, wobei eine erste Stirnseite 10 mit in Figur 1 dargestellten ersten Einkoppelflächen 11 versehen ist und auf der Leiterplatte 7 angeordnet ist, wobei die Leuchtdioden 8 in im Wesentlichen äquidistanten Abständen zueinander der Ringform folgend auf der Leiterplatte 7 angeordnet in die erste Einkoppelfläche 19 einstrahlen.

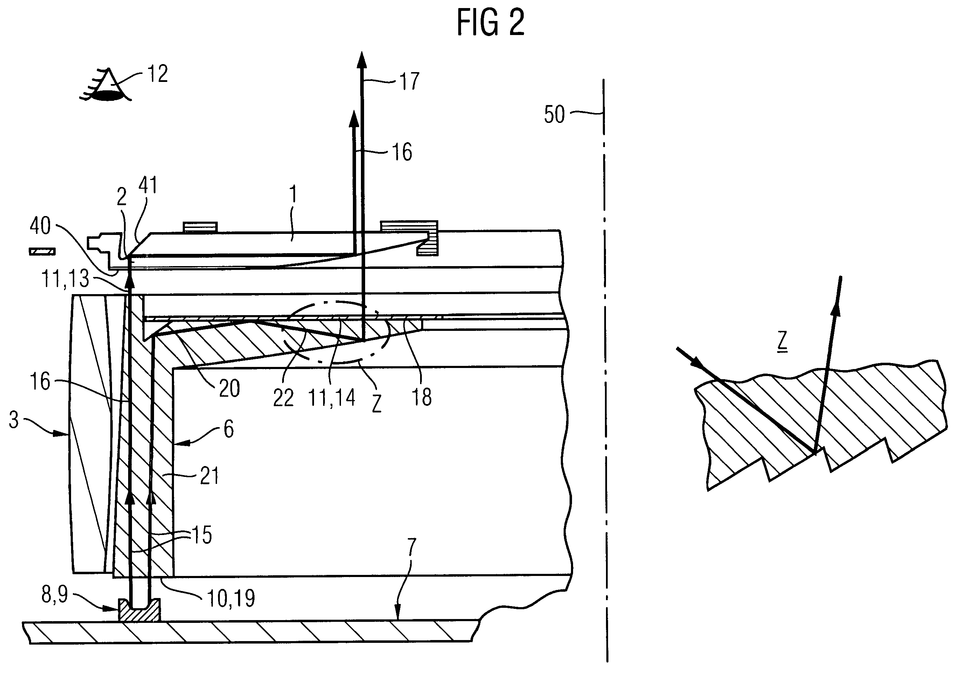

Die zuvor im Einzelnen aufgeführten Bauelemente sind in der Schnittdarstellung der Figur 2 identisch bezeichnet. In gefügter Anordnung umgibt der Halter 3 das Lichtleiterelement 6, welches auf einer der ersten Stirnseite 10 gegenüberliegenden zweiten Stirnseite 11 zwei einem Betrachter 12 zugewendete Auskoppelflächen aufweist, eine erste Auskoppelfläche 13 und eine zweite Auskoppelfläche 13, 14. Das Licht 15 aus der Lichtquelle 9 wird in dem Lichtleiterelement 6 in zwei Teile 16, 17 aufgespalten, wobei ein erster Teil 16 des Lichts 15 der Beleuchtung des Zeigers 1 dient und ein zweiter Teil 17 des Lichts 15 der Hinterleuchtung eines dem Betrachter 12 zugewendeten Zifferblatts 18 verwendet wird. Das Zifferblatt 18 ist mit einer nicht im Einzelnen dargestellten Skala versehen, an der der Zeiger 1 im Betrieb nicht im Einzelnen dargestellte Messwerte anzeigt. Zur Aufteilung des Lichts 15 in die beiden Teile 16, 17 weist das Lichtleiterelement 6 eine Reflektionsfläche 20 auf, an der der zweite Teil 17 des Lichts 15 von dem ersten Teil 16 trennend gespiegelt wird.

Das Lichtleiterelement 6 besteht im Wesentlichen aus zwei Abschnitten, einem ersten Abschnitt 21 und einem zweiten Abschnitt 22, wobei der erste Abschnitt 21 das Licht 15 von der ersten Einkoppelfläche 11 aus im Wesentlichen in gerader Verlängerung zu dem Betrachter leitet und der zweite Abschnitt 22 den zweiten Teil 17 des Lichts 15 nach radial innen der Ringform zur Beleuchtung des Zifferblatts 18 umleitet. Der sich nach radial innen erstreckende zweite Abschnitt 22 verjüngt sich mit zunehmendem Abstand von dem ersten Abschnitt 21 bezüglich seiner Materialstärke in drehaxialer Richtung, so dass eine möglichst homogene Ausleuchtung des Zifferblatts 18 in radialer Richtung erfolgt.

Für eine homogene Ausleuchtung im Umfangsrichtung der Ringform über einen Winkelbereich von etwa 270° sind in der Leiterplatte 7 in Umfangsrichtung insgesamt zwölf Leuchtdioden 8 angeordnet, wobei das Material des Lichtleiterelements 6 die aufgrund der lokalen Lichteinkopplungen entstehenden Helligkeitsdifferenzen bis zum Zeiger 1 bzw. dem Zifferblatt 18 mittels Diffusion eliminiert.

Im Mittelbereich der Ringform des Zeigerinstruments ermöglicht die erfindungsgemäße Ausbildung die Anordnung eines nicht dargestellten Displays, mittels dessen dem Betrachter 12 weitere Informationen zur Anzeige gebracht werden können. Aufgrund der Ringform des Trägerkörpers 2 weist der Zeiger 1 eine kreisförmige Bewegungsbahn 30 auf, die eine Ebene der Anzeige definiert. Der Zeiger 1 bzw. der Trägerkörper 2 ist mit einer zweiten Einkoppelfläche 40 versehen, die der ersten Auskoppelfläche 13 gegenüberliegt. An einer Grenzfläche 41 wird der eintretende Teil 17 des Lichts 15 in Erstreckungsrichtung des Zeigers 1 reflektiert, bis die verjüngende Zeigerform ebenfalls mittels einer Grenzfläche das Licht 15 gemäß dem in Figur 2, Detail Z dargestellten Strahlenverlauf in Richtung des Betrachters 12 spiegelt. Die in Detail Z dargestellte Oberflächenstruktur ist derart gestaltet und die Form des Zeigers 1 ist hierbei in der Weise verjüngend gewählt, dass eine über die Länge des Zeigers 1 homogene Ausleuchtung erfolgt.

## Patentansprüche

1. Zeigerinstrument, insbesondere für ein Kraftfahrzeug, mit einem Zeigerantrieb (5) zur Auslenkung eines um eine Drehachse drehbaren Trägerkörpers (2), an dem ein in einer Anzeige sichtbarer Zeiger (1) vorhanden ist, wobei der Trägerkörper (2) als Ring ausgestaltet und in Lagern (4) gelagert ist, wobei die Lager (4) derart außerhalb der Drehachse (50) angeordnet sind, dass der zentrale Bereich des Rings frei von Bauteilen der Zeigereinrichtung gehalten wird, wobei auf der einem Betrachter (12) abgewandten Seite des Trägerkörpers (2) ein Lichtleiterelement (6) angeordnet ist, in welches Licht (15) mindestens einer Lichtquelle (9) einleitbar ist und welches Lichtleiterelement (6) sich entlang zumindest eines Teiles der Bewegungsbahn des Zeigers (1) erstreckt, und der Trägerkörper (2) und vorzugsweise der Zeiger (1) lichtleitend ausgebildet ist, so dass der Zeiger (1) mittels aus dem Lichtleiterelement (6) austretenden Lichtes (15) beleuchtbar ausgebildet ist, **dadurch gekennzeichnet, dass** zumindest ein Teil des Lichtleiterelements (6) zumindest in Erstreckungsrichtung parallel zur Anzeige abschnittweise als zylindrisches Ringsegment ausgebildet ist, eine erste Stirnseite (10) des Ringsegments mit mindestens einer ersten Einkoppelfläche (19) versehen ist und eine zweite Stirnseite (11) des Ringsegments mit mindestens einer zweiten Auskoppelfläche (14) versehen ist.

2. Zeigerinstrument nach Anspruch 1, wobei der Trägerkörper (2) außerhalb der Drehachse Zeigerantriebs (5) angetrieben ist.

3. Zeigerinstrument nach Anspruch 1, wobei das Lichtleiterelement (6) eine erste Einkoppelfläche (19) aufweist, in welche das Licht (15) der Lichtquelle (9) einleitbar ist und dass das Lichtleiterelement (6) eine erste Auskoppelfläche (13) aufweist, welche sich entlang der Bewegungsbahn des Zeigers (1) erstreckt, und der Zeiger (1) und/oder der Trägerkörper (2) eine zweite Einkoppelfläche (40) aufweist, die gegenüber der ersten Auskoppelfläche (13) des Lichtleiterelements (6) angeordnet ist, so dass aus der ersten Auskoppelfläche (13) austretendes Licht (15) in die zweite Einkoppelfläche (40) des Zeigers (1) und/oder des Trägerkörpers (2) zur Beleuchtung des Zeigers (1) eintreten kann.

4. Zeigerinstrument nach Anspruch 1, wobei das Zeigerinstrument eine Skala aufweist, die sich entlang der Bewegungsbahn des Zeigers (1) erstreckt, so dass der Zeiger (1) entlang der Skala zur Anzeige von Messwerten beweglich ausgebildet ist.

5. Zeigerinstrument nach Anspruch 4, wobei die Skala auf einem Display dargestellt ist.

6. Zeigerinstrument nach Anspruch 1, 2, 3, 4 oder 5, wobei die Bewegungsbahn die Form eines Kreissegments oder Kreises aufweist.

7. Zeigerinstrument nach Anspruch 4 oder 5, wobei die Skala radial außerhalb des Kreises angeordnet ist.

8. Zeigerinstrument nach Anspruch 1, wobei die Lichtquelle (9) von mehreren Leuchtdioden (8) gebildet ist.

9. Zeigerinstrument nach Anspruch 4, 5 oder 7, wobei die Skala als Zifferblatt (18) ausgebildet ist, welches Ziffern aufweist, die transmissiv ausgebildet sind.

10. Zeigerinstrument nach einem der vorstehenden Ansprüche, wobei die erste Stirnseite (10) einer Leiterplatte (7) zugewendet angeordnet ist, die mit Leuchtdioden (8) im Bereich der Einkoppelfläche bestückt ist.

11. Zeigerinstrument nach einem der vorhergehenden Ansprüche, wobei der Trägerkörper (2) zumindest zum Teil als Lichtleiter ausgebildet und derart gestaltet ist, dass in die zweite Einkoppelfläche (40) einfallendes Licht (15) zumindest teilweise zu dem Zeiger (1) umgelenkt wird.

12. Zeigerinstrument nach einem der vorhergehenden Ansprüche, wobei das Lichtleiterelement (6) neben der ersten Auskoppelfläche (13) noch eine zweite Auskoppelfläche (14) aufweist, welche auf der dem Betrachter (12) abgewandten Seite der Skala angeordnet ist und das Lichtleiterelement (6) derart ausgebildet ist, dass ein erster Teil (16) des eingekoppelten Lichtes (15) aus der ersten Auskoppelfläche (13) austritt und ein zweiter Teil (17) des eingekoppelten Lichtes (15) aus der zweiten Auskoppelfläche (14) austritt, so dass die Skala auf diese Weise hinterleuchtet und der Zeiger (1) beleuchtet ist.

13. Zeigerinstrument nach Anspruch 12, wobei das Lichtleiterelement (6) zumindest abschnittsweise in einer zu der Anzeige senkrechten Ebene einen Querschnitt aufweist, welcher einen ersten Abschnitt (21) aufweist, der sich von der im Bereich der Lichtquelle (9) befindlichen Einkoppelfläche zu der in dem Bereich des Trägerkörpers (2) oder Zeigers (1) befindlichen ersten Auskoppelfläche (13) erstreckt und welcher Querschnitt einen zweiten Abschnitt (22) aufweist, welcher eine zweite Auskoppelfläche (14) aufweist und der von dem ersten Abschnitt (21) abzweigt, wobei die zweite Auskoppelfläche (14) zur Hinterleuchtung einer Skala rückseitig eines Zifferblattabschnittes oder eines Displays angeordnet ist.

14. Zeigerinstrument nach Anspruch 13, wobei das Lichtleiterelement (6) in der Erstreckungsrichtung parallel zu der Anzeige eine Krümmung aufweist und der zweite Abschnitt (22) radial innen angeordnet ist.

15. Zeigerinstrument nach Anspruch 13 oder 14, wobei der zweite Abschnitt (22) in einer zu der Anzeige senkrechten Ebene einen Querschnitt aufweist, der sich mit radialem Abstand zu dem ersten Abschnitt (21) verjüngt.

16. Zeigerinstrument nach einem der vorhergehenden Ansprüche, wobei die erste Auskoppelfläche (13) des Lichtleiterelements (6) eine sich über zumindest einen Teilkreis erstreckende Ringform aufweist.

## Claims

1. Pointer instrument, in particular for a motor vehicle, comprising a pointer drive (5) for deflecting a support body (2) rotatable about an axis of rotation, on which support body a pointer (1) that is visible in a display is present, wherein the support body (2) is designed as a ring and mounted on bearings (4), wherein the bearings (4) are arranged away from the axis of rotation (50) in such a way that the central region of the ring is kept free from components of the pointer apparatus, wherein a light-guiding element (6) is arranged on the side of the support body (2) facing away from an observer (12), into which light-guiding element light (15) from at least one light source (9) is guidable and which light-guiding element (6) extends along at least part of the trajectory of the pointer (1), and the support body (2) and preferably the pointer (1) are embodied in a light-guiding manner such that the pointer (1) is embodied to be illuminable by means of light (15) emerging from the light-guiding element (6), **characterized in that** at least part of the light-guiding element (6), at least in the direction of extent parallel to the display, is embodied in portions as a cylindrical ring segment, a first end face (10) of the ring segment is provided with at least one first input coupling surface (19) and a second end face (11) of the ring segment is provided with at least one second output coupling surface (14).

2. Pointer instrument according to Claim 1, wherein the support body (2) is driven outside of the axis of rotation of the pointer drive (5).

3. Pointer instrument according to Claim 1, wherein the light-guiding element (6) has a first input coupling surface (19), into which the light (15) of the light source (9) is introducible, and wherein the light-guiding element (6) has a first output coupling surface (13), which extends along the trajectory of the pointer (1), and the pointer (1) and/or the support body (2) has a second input coupling surface (40) which is arranged opposite the first output coupling surface (13) of the light-guiding element (6) such that light (15) emerging from the first output coupling surface (13) can enter into the second input coupling surface (40) of the pointer (1) and/or of the support body (2) for illuminating the pointer (1).

4. Pointer instrument according to Claim 1, wherein the pointer instrument has a scale extending along the trajectory of the pointer (1) such that the pointer (1) is embodied so as to be movable along the scale for the purposes of indicating measurement values.

5. Pointer instrument according to Claim 4, wherein the scale is depicted on a display.

6. Pointer instrument according to Claim 1, 2, 3, 4 or 5, wherein the trajectory has the form of a circular segment or a circle.

7. Pointer instrument according to Claim 4 or 5, wherein the scale is arranged radially outside of the circle.

8. Pointer instrument according to Claim 1, wherein the light source (9) is formed by a plurality of light-emitting diodes (8).

9. Pointer instrument according to Claim 4, 5 or 7, wherein the scale is embodied as a dial (18) which has numbers embodied in a transmissive manner.

10. Pointer instrument according to one of the preceding claims, wherein the first end face (10) is arranged facing a printed circuit board (7) equipped with light-emitting diodes (8) in the region of the input coupling surface.

11. Pointer instrument according to one of the preceding claims, wherein the support body (2) is embodied at least in part as a light guide and designed in such a way that light (15) entering the second input coupling surface (40) is at least partly deflected to the pointer (1).

12. Pointer instrument according to one of the preceding claims, wherein the light-guiding element (6) has a second output coupling surface (14) in addition to the first output coupling surface (13), which second output coupling surface is arranged on the side of the scale facing away from the observer (12), and the light-guiding element (6) is embodied in such a way that a first part (16) of the coupled-in light (15) emerges from the first output coupling surface (13) and a second part (17) of the coupled-in light (15) emerges from the second output coupling surface (14) such that the scale thus is illuminated from behind and the pointer (1) is illuminated.

13. Pointer instrument according to Claim 12, wherein the light-guiding element (6), at least in portions, has a cross section in a plane perpendicular to the display, which cross section has a first portion (21) which extends from the input coupling surface situated in the region of the light source (9) to the first output coupling surface (13) situated in the region of the support body (2) or pointer (1) and which cross section has a second portion (22) which has a second output coupling surface (14) and which branches from the first portion (21), wherein the second output coupling surface (14) is arranged on the rear side of a dial portion or of a display for illuminating a scale from behind.

14. Pointer instrument according to Claim 13, wherein the light-guiding element (6) has a curvature in the direction of extent parallel to the display and the second portion (22) is arranged radially inside.

15. Pointer instrument according to Claim 13 or 14, wherein the second portion (22) has a cross section in a plane perpendicular to the display, which cross section tapers with radial distance from the first portion (21).

16. Pointer instrument according to one of the preceding claims, wherein the first output coupling surface (13) of the light-guiding element (6) has a ring form extending over at least a partial circle.

## Revendications

1. Instrument à aiguille, notamment destiné à un véhicule automobile, comportant un mécanisme d'entraînement d'aiguille (5) destiné à faire dévier un corps de support (2) tournant autour d'un axe de rotation, sur lequel est présente une aiguille (1) visible dans un affichage, dans lequel le corps de support (2) est réalisé sous la forme d'une bague et est monté dans des paliers (4), dans lequel les paliers (4) sont disposés en dehors de l'axe de rotation (50) afin que la partie centrale de la bague soit maintenue séparée de composants du dispositif à aiguille, dans lequel un élément conducteur de lumière (6) est disposé du côté du corps de support (2) qui est opposé à un observateur (12), élément conducteur de lumière dans lequel la lumière (15) d'au moins une source de lumière (9) peut être introduite et lequel élément conducteur de lumière (6) s'étend le long d'au moins une partie du trajet de déplacement de l'aiguille (1), et le corps de support (2) ainsi que, de préférence, l'aiguille (1), sont réalisés de manière à être conducteurs de lumière afin que l'aiguille (1) soit réalisée de manière à pouvoir être éclairée par la lumière (15) émanant de l'élément conducteur de lumière (6),
**caractérisé en ce qu'**au moins une partie de l'élément conducteur de lumière (6) est réalisée par sections sous la forme d'un segment de bague cylindrique au moins dans une direction d'extension parallèle à l'affichage, une première face avant (10) du segment de bague est munie d'au moins une première surface d'accouplement (19) et une deuxième face avant (11) du segment de bague est munie d'au moins une deuxième surface de désaccouplement (14).

2. Instrument à aiguille selon la revendication 1, dans lequel le corps de support (2) est entraîné en dehors de l'axe de rotation du mécanisme d'entraînement d'aiguille (5).

3. Instrument à aiguille selon la revendication 1, dans lequel l'élément conducteur de lumière (6) présente une première surface de couplage d'entrée (19) dans laquelle la lumière (15) de la source de lumière (9) peut être introduite et en ce que l'élément conducteur de lumière (6) présente une première surface de couplage de sortie (13) qui s'étend le long du trajet de déplacement de l'aiguille (1), et
l'aiguille (1) et/ou le corps de support (2) présente/présentent une deuxième surface de couplage d'entrée (40) qui est disposée en face de la première surface de couplage de sortie (13) de l'élément conducteur de lumière (6) de manière à ce que la lumière (15) émanant de la première surface de couplage de sortie (13) puisse être incidente sur la deuxième surface de couplage d'entrée (40) de l'aiguille (1) et/ou du corps de support (2) afin d'éclairer l'aiguille (1).

4. Instrument à aiguille selon la revendication 1, dans lequel l'instrument à aiguille présente une échelle qui s'étend le long du trajet de déplacement de l'aiguille (1) afin que l'aiguille (1) soit réalisée de manière à pouvoir se déplacer le long de l'échelle pour afficher des valeurs de mesure.

5. Instrument à aiguille selon la revendication 4, dans lequel l'échelle est représentée sur un affichage.

6. Instrument à aiguille selon la revendication 1, 2, 3, 4 ou 5, dans lequel le trajet de déplacement présente la forme d'un segment de cercle ou d'un cercle.

7. Instrument à aiguille selon la revendication 4 ou 5, dans lequel l'échelle est disposée radialement à l'extérieur du cercle.

8. Instrument à aiguille selon la revendication 1, dans lequel la source de lumière (9) est réalisée à partir d'une pluralité de diodes électroluminescentes (8).

9. Instrument à aiguille selon la revendication 4 5 ou 7, dans lequel l'échelle est réalisée sous la forme d'un cadran (18) qui présente des chiffres réalisés de manière à être transmissifs.

10. Instrument à aiguille selon l'une quelconque des revendications précédentes, dans lequel la première face avant (10) est disposée en face d'une carte de circuit imprimé (7) qui est équipée de diodes électroluminescentes (8) dans la région de la surface de couplage d'entrée.

11. Instrument à aiguille selon l'une quelconque des revendications précédentes, dans lequel le corps de support (2) est réalisé au moins en partie sous la forme d'un conducteur de lumière et est conçu de manière à ce que la lumière (15) incidente sur la deuxième surface de couplage en entrée (40) soit au moins partiellement déviée vers l'aiguille (1).

12. Instrument à aiguille selon l'une quelconque des revendications précédentes, dans lequel l'élément conducteur de lumière (6) présente également, outre la première surface de couplage de sortie (13), une deuxième surface de couplage de sortie (14) qui est disposée du côté de l'échelle qui est opposé à l'observateur (12) et l'élément conducteur de lumière (6) est réalisé de manière à ce qu'une première partie (16) de la lumière (15) couplée en entrée émane de la première surface de couplage de sortie (13) et à ce qu'une deuxième partie (17) de la lumière (15) couplée en entrée émane de la deuxième surface de couplage de sortie (14), afin que l'échelle soit ainsi rétro-éclairée et que l'aiguille (1) soit éclairée.

13. Instrument à aiguille selon la revendication 12, dans lequel l'élément conducteur de lumière (6) présente au moins par parties, dans un plan perpendiculaire à l'affichage, une section transversale qui présente une première partie (21) s'étendant depuis la surface de couplage d'entrée se trouvant dans la région de la source de lumière (9) à la première surface de couplage de sortie (13) se trouvant dans la région du corps de support (2) ou de l'aiguille (1) et laquelle section transversale présente une deuxième partie (22) présentant une deuxième surface de couplage de sortie (14) et se ramifiant à partir de la première partie (21), dans lequel la deuxième surface de couplage de sortie (14) est disposée de manière à effectuer un rétroéclairage d'une échelle d'une partie de cadran ou d'un afficheur.

14. Instrument à aiguille selon la revendication 13, dans lequel l'élément conducteur de lumière (6) présente une courbure dans la direction d'extension parallèle à l'affichage et la deuxième partie (22) est disposée radialement vers l'intérieur.

15. Instrument à aiguille selon la revendication 13 ou 14, dans lequel la deuxième partie (22) présente, dans un plan perpendiculaire à l'affichage, une section transversale qui s'amincit avec la distance radiale par rapport à la première partie (21).

16. Instrument à aiguille selon l'une quelconque des revendications précédentes, dans lequel la première surface de couplage de sortie (13) de l'élément conducteur de lumière (6) présente une forme annulaire s'étendant sur au moins une partie de cercle.
